Europäisches Patentamt

European Patent Office

Office européen des brevets

(19)

(11) Veröffentlichungsnummer : **0 277 125**
**B1**

(12) **EUROPÄISCHE PATENTSCHRIFT**

(45) Veröffentlichungstag der Patentschrift :
**24.01.90**

(21) Anmeldenummer : **86905784.4**

(22) Anmeldetag : **17.09.86**

(86) Internationale Anmeldenummer :
**PCT/EP 86/00535**

(87) Internationale Veröffentlichungsnummer :
**WO/8701687 (26.03.87 Gazette 87/07)**

(51) Int. Cl.⁵ : **C 02 F   1/58**

(54) **VERFAHREN ZUR ENTFERNUNG VON FLüCHTIGEN INHALTSSTOFFEN AUS IN KOKEREIANLAGEN ANFALLENDEN WäSSERN.**

(30) Priorität : **21.09.85 DE 3533799**

(43) Veröffentlichungstag der Anmeldung :
**10.08.88 Patentblatt 88/32**

(45) Bekanntmachung des Hinweises auf die Patenterteilung : **24.01.90 Patentblatt 90/04**

(84) Benannte Vertragsstaaten :
**DE FR GB IT**

(56) Entgegenhaltungen :
**DE--A— 1 642 416**
**US--A— 3 754 376**

(73) Patentinhaber : **Bergwerksverband GmbH**
**Franz-Fischer-Weg 61**
**D-4300 Essen 13 (DE)**

(72) Erfinder : **POLLERT, Georg**
**Hòlsebergstrasse 11**
**D-4300 Essen 14 (DE)**

**Beschreibung**

Die Erfindung betrifft ein Verfahren zur Entfernung von flüchtigen Inhaltsstoffen, wie z. B. Ammoniak, Schwefelwasserstoff, Blausäure, aus Wässern von Kokereianlagen mit Gas in einem Stripper.

Bei der Verkokung von Kohle fallen Wässer an, die neben organischen und nichtflüchtigen anorganischen Stoffen auch flüchtige anorganische Stoffe, wie z. B. Ammoniak, Schwefelwasserstoff und Blausäure enthalten. Diese flüchtigen anorganischen Verbindungen müssen weitestgehend entfernt werden, bevor man diese Wässer als Waschwässer in den Prozeß zurückfuhrt oder — meistens nach einer weiteren Behandlung zur Entfernung oder Vermirderung der anderen schädlichen Inhaltstoffe — als Abwasser ableitet. Die Entfernung der flüchtigen anorganischen Inhaltsstoffe aus solchen Wässern wird in Kokereien üblicherweise in Abtreibern bzw. Strippern mit Wasserdampf durchgeführt. Es können als Strippgas neben Wasserdampf auch andere Gase verwendet werden.

In der DE-OS 14 44 972 wird z. B. der Vorschlag gemacht, Wasser aus dem Vorlagenkreislauf einer Kokerei mit einem inerten Gas bzw. Luft, Rauchgas oder einem Gemisch dieser Medien zu strippen, um Ammoniak und Phenole zu entfernen.

Wegen der unbefriedigenden Ammoniakverkaufspreise werden in Kokereien in zunehmendem Maße Ammoniakspaltanlagen eingesetzt. Ein Verfahren gemäß der eingangs genannten Gattung ist aus E.TH. Herpers ; Haus der Technik ; Vortrag, Vortragsveröffentlichung 470, Seite 41 bis 50, bekannt geworden. Die Ammoniakspaltanlagen werden mit den Brüden beschickt, die aus den Abtreibern (Stripper) stammen und hauptsächlich Ammoniak, Kohlendioxid und Wasserdampf, aber im allgemeinen auch Blausäure und Schwefelwasserstoff enthalten. Während die Blausäure vollständig und das Ammoniak bis auf einen geringen Restgehalt gespalten wird, bleibt der Schwefelwasserstoff unsersetzt erhalten. Daher ist eine Reinigung der Spaltgase notwendig, die normalerweise durchgeführt wird, indem man das Spaltgas nach Wärmerückgewinnung und Kühlung in den Rohgasreinigungsprozeß führt. Das Spaltgas enthält auch nach der Wärmerückgewinnung (Dampferzeugung) noch Energie, die aber als minderwertig gilt und daher als Abwärme abgeführt wird (Gas- und Wasserfach, Heft 9 (1964), Seite 225 bis 232).

Der Erfindung liegt die Aufgabe zugrunde, bei einem Verfahren der eingangs genannten Gattung die in dem Abgas der Ammoniakspaltanlage enthaltene Energie, die als Abwärme abgeführt wird, zu nutzen.

Diese Aufgabe wird dadurch gelöst, daß das Abgas einer Ammoniakspaltanlage in einen Stripper geleitet wird, dessen Betriebstemperatur über 70 °C, vorzugsweise zwischen 70 und 90 °C beträgt.

Weiterbildungen der Erfindung erfolgen durch die Merkmale der Unteransprüche.

Das erfindungsgemäße Verfahren läßt sich mit geringem Aufwand in Kokereien mit einer Ammoniakspaltanlage integrieren. Es muß lediglich ein Stripper gemäß Anspruch 1 in die Abgasleitung der Ammoniakspaltanlage eingefügt werden. Ein zusätzlicher Reinigungsschritt für das diesen Stripper verlassende Gas ist nicht erforderlich, da es in den Rohgasreinigungsprozeß zurückgeführt wird.

Durch Versuche hat sich überraschend gezeigt, daß das Strippen mit dem Abgas, obwohl es hohe Konzentrationen an Schwefelwasserstoff (ca. 5-20 $g/m^3$, i. N., trocken) enthält, zu Ergebnissen führt, die denen eines konventionellen dampfbetriebenen Abtreibers gleichwertig sind.

In einer weiteren vorteilhaften Ausgestaltung der Erfindung kann das spaltgas einer Ammoniakspaltanlage mit dem Abgas einer Claus-Anlage vermischt und zum Strippen verwendet werden. Auf diese Weise kann auch die Energie des Abgases der Claus-Anlage genutzt werden. Da das Gas ebenfalls $H_2S$-haltig ist, erübrigt sich durch die Anwendung des erfindungsgemäßen Verfahrens die zusätzliche $H_2S$-Entfernung.

Als Strippgas kann auch das Abgas einer Ammoniak-Spaltanlage verwendet werden, das eine Claus-Anlage durchläuft, bevor es in den Stripper geführt wird.

Bei der Anwendung des erfindungsgemäßen Strippens mit diesen Gasen wird die Energie genutzt,-die sonst als Abwärme abgeführt wird, und somit die entsprechende Energiemenge an Dampf eingespart. Gleichzeitig entfällt der Bedarf an Kühlwasser, das andernfalls notwendig wäre, um den eingebrachten Dampf auszukondensieren, und ebenso die sonst in Form von Dampfkondensat anfallende Abwassermenge.

Das Verhältnis zwischen Gas und Flüssigkeit in dem Stripper liegt zwischen etwa 50 und 500 $m^3$ (i. N., trocken) zu 1 $m^3$, vorzugsweise zwischen 80 und 250 $m^3$ (i N., trocken) zu 1 $m^3$.

Zur Erzielung höherer Temperaturen im Stripper kann die Dampferzeugung aus dem spaltgas verringert werden. Es ist aber auch denkbar, zu diesem Zweck, gemäß Anspruch 6, dem Spaltgas direkt Dampf zuzumischen.

Die Erfindung wird nachfolgend anhand der Zeichnung und der Beispiele näher beschrieben.

Die Zeichnung zeigt in

Figur 1 ein Verfahrensschema des erfindungsgemäßen Strippens mit dem Abgas einer Ammoniakspaltanlage und einer Claus-Anlage sowie in

Figur 2 eine schematische Darstellung der Verfahrensführung, bei der das Abgas der Ammoniakspaltanlage eine Claus-Anlage durchläuft, bevor es in den Stripper geführt wird.

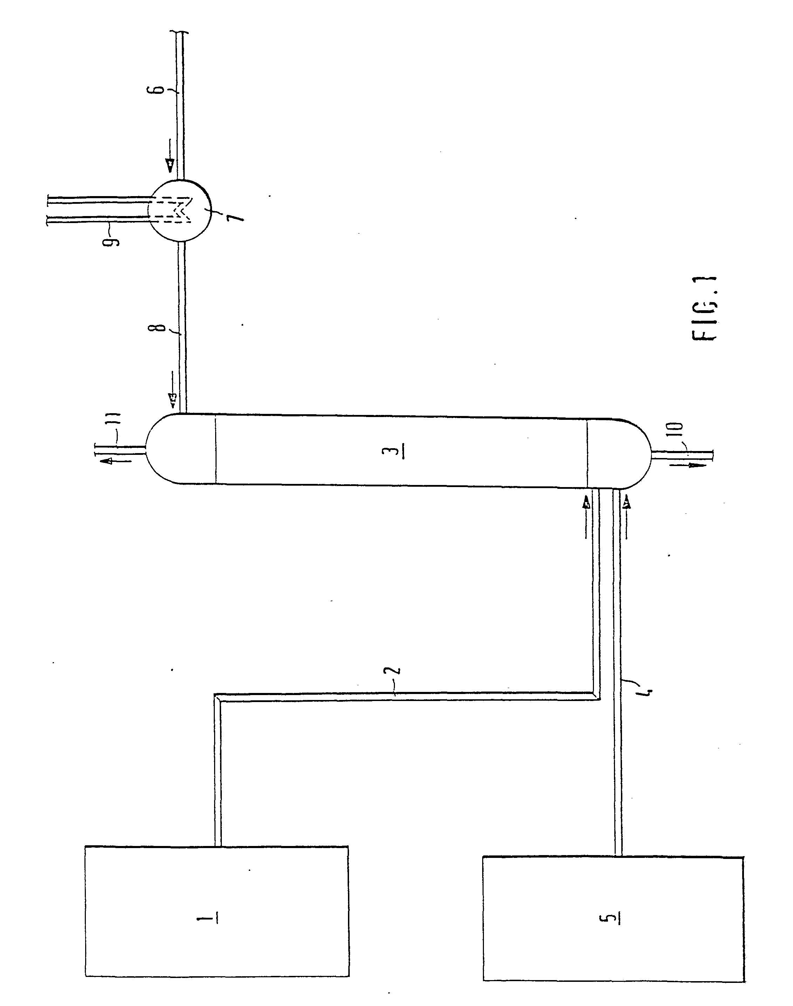

Aus Figur 1 geht hervor, daß das Abgas einer Ammoniakspaltanlage 1 über eine Leitung 2 in einen Stripper 3 geführt wird. Zusätzlich kann in den Stripper 3 über eine Leitung 4 aus einer Claus-Anlage 5 Gas zugeführt werden. Über eine Leitung 6, einen Wärmetauscher 7 und eine Leitung 8 wird dem Stripper 3 mit flüchtigen Inhaltsstoffen beladenes Wasser zugeführt. Mit einer Leitung 9 wird das beladene Wasser in dem Wärmetauscher 7 mit Dampf aufgeheizt. Der Stripperablauf wird über eine Leitung 10 abgeführt und das mit den flüchtigen Substanzen beladene Gas verläßt den Stripper 3 über eine Leitung 11.

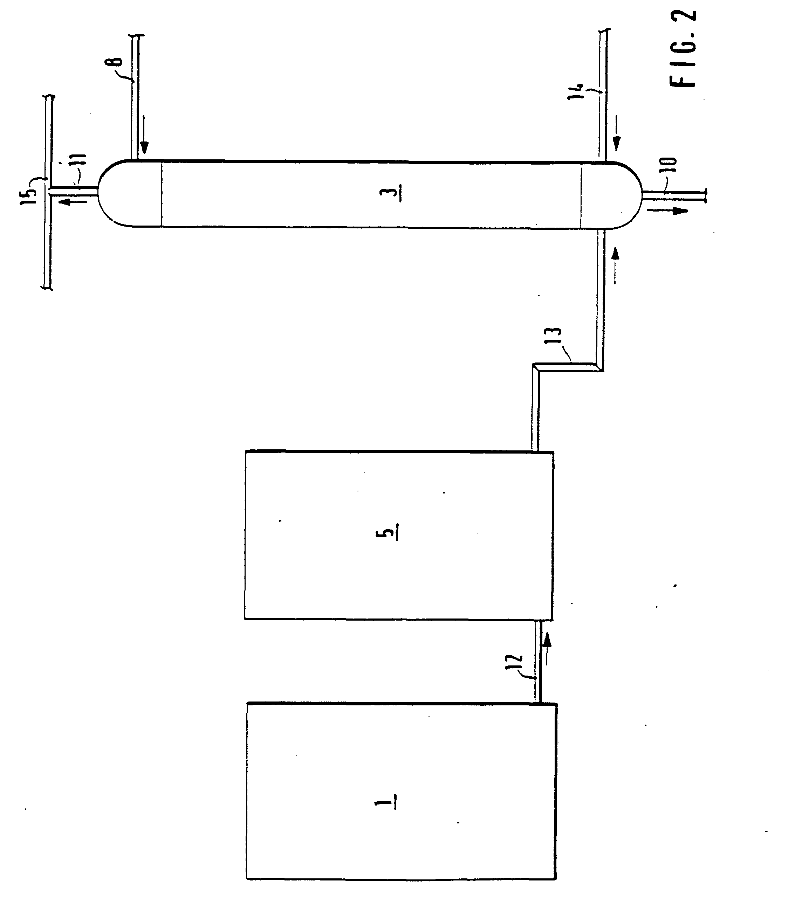

Figur 2 zeigt, daß das Abgas der Ammoniakspaltanlage 1 zunächst über eine Leitung 12 in die Claus-Anlage 5 geführt wird. Durch eine Leitung 13 gelangt es dann in den Stripper 3. Über die Leitung 8 wird dem Stripper 3 mit flüchtigen Inhaltsstoffen beladenes Wasser zugeführt. Das mit den flüchtigen Substanzen beladene Gas wird durch Leitung 11 in die Rohgasleitung 15 der Kokerei geleitet. Durch eine Leitung 14 kann dem Strippgas Wasserdampf zugesetzt werden.

Beispiel 1

In einer Anlage gemäß Figur 1 gelangen pro h 4.400 m³ (i. N., trocken) Spaltgas mit einem Restgehalt von 0,1 g Ammoniak/m³ (i. N., trocken), einem Schwefelwasserstoffgehalt von 12 g/m³ (i. N., trocken) sowie einem Wassergehalt von 640 g/m³ (i. N., trocken) und einer Temperatur von 300 °C aus dem Wasserdampferzeuger der Ammoniakspaltanlage 1 durch Leitung 2 in den Fuß des 20 bödigen Strippers 3. über Leitung 4 werden pro Stunde 800 m³ (i. N., trocken) Abgas aus der Claus-Anlage 5 mit einem Schwefelwasserstoffgehalt von 25 g/m³ (i. N., trocken), einem Schwefeldioxidgehalt von 23,5 g/m³ (i. N., trocken) sowie einem Wassergehalt von 300 g/m³ (i. N., trocken) und einer Temperatur von 140 °C in den Fuß des Strippers geführt. Hier werden die Gase vom Stripperablauf gekühlt und wasserdampfgesättigt, so daß 1.125 kg Wasser stündlich verdampft werden und für den Stripprozeß 5.200 m³ (i. N., trocken) Gas mit einem Wasserdampfgehalt von 804 g/m³ (i. N., trocken) und einer entsprechenden Temperatur von 81,5 °C zur Verfügung stehen. über Leitung 6, Wärmetauscher 7 und Leitung 8 werden stündlich 37 m³ Kohlewasser aus dem Vorlagenkreislauf der Kokerei auf den Kopf des Strippers 3 gegeben. Im Wärmetauscher 7 wird das Kohlewasser mit Dampf aus Leitung 9 indirekt von 70 auf 81,5 °C aufgeheizt. Es enthält 3 g freies Ammoniak, 0,5 g schwefelwasserstoff und 0,05 g Blausäure pro Liter. Im Stripper wird es weitestgehend von seinen flüchtigen Inhaltsstoffen befreit. Der Stripperablauf wird über Leitung 10 abgeführt und hat einen Restgehalt an Blausäure von unter 20 mg/l und an schwefelwasserstoff von 4 mg/l. Der Gehalt an freiem freiem Ammoniak ist null, da das nicht mit dem Gas entfernte Ammoniak durch das aus der Claus-Anlage eingebrachte Schwefeldioxid als Ammoniumsulfit gebunden wird. Das mit den flüchtigen Substanzen beladene Gas verläßt den Stripper über Leitung 11 mit 80 °C.

Beispiel 2

In einer Anlage gemäß Fig. 2 verlassen durch Leitung 13 stündlich 4 000 m³ (i. N., trocken) Gas die Claus-Anlage 5, die durch Leitung 12 aus der Ammoniakspaltanlage 1 gespeist wird. Das Gas hat eine Temperatur von 120 °C und einen Restgehalt von 15 g Schwefelwasserstoff, 20 mg Ammoniak und Spuren Schwefeldioxid sowie einen Wassergehalt von 400 g/m³ (i. N., trocken). Es gelangt in den Fuß des 25 bödigen Strippers 3. Über Leitung 14 werden dem Gas stündlich 560 kg Wasserdampf zugesetzt, so daß es eine Sättigungstemperatur von ca. 77 °C im Stripper 3 erreicht. Über Leitung 8 werden stündlich 18 m³ Kohlewasser aus dem Vorlagenkreislauf der Kokerei mit 77 °C auf den Kopf des strippers 3 gegeben. Es enthält 2,5 g freies Ammoniak, 0,3 g Schwefelwasserstoff und 0,04 g Blausäure pro Liter und wird im Stripper 3 fast vollständig von seinen flüchtigen anorganischen Bestandteilen befreit. Der Stripperablauf gelangt über Leitung 10 mit 77 °C aus dem System und kann nach Kühlung z. b. unmittelbar zur Ammoniak-Wasserwäsche des Koksofengases verwendet werden. Es enthält noch 70 mg Ammoniak, weniger als 20 mg Blausäure und 5 mg Schwefelwasserstoff pro Liter. Das mit den flüchtigen Substanzen beladene Gas verläßt den Stripper 3 über Leitung 17 mit 75 °C und wird zur gemeinsamen Kühlung und Reinigung mit dem Koksofenrohgas der Rohgasleitung 15 zugeführt.

Patentansprüche

1. Verfahren zur Entfernung von flüchtigen Inhaltsstoffen, wie z. B. Ammoniak, Schwefelwasserstoff, Blausäure, aus Wässern von Kokereianlagen mit Gas in einem Stripper, dadurch gekennzeichnet, daß das Abgas einer Ammoniakspaltanlage in einen Stripper geleitet wird, dessen Betriebstemperatur über 70 °C, vorzugsweise zwischen 70 und 90 °C beträgt.

2. Verfahren nach Anspruch 1, dadurch gekennzeichnet, daß dem Abgas aus der Ammoniakspaltanlage das Abgas einer Claus-Anlage zugemischt wird.

3. Verfahren nach Anspruch 1, dadurch gekennzeichnet, daß das Abgas aus der Ammoniakspaltanlage eine Claus-Anlage durchläuft, bevor es in den Stripper geführt wird.

4. Verfahren nach einem oder mehreren der Ansprüche 1 bis 3, dadurch gekennzeichnet, daß das Verhältnis Gas zu Flüssigkeit zwischen 50 und 500 m³ (i. N., trocken) zu 1 m³, vorzugsweise zwischen 80 und 250 m³ (i. N., trocken) zu 1 m³ liegt.

5. Verfahren nach einem oder mehreren der Ansprüche 1 bis 4, dadurch gekennzeichnet, daß dem Abgas Dampf zugemischt wird.

Claims

1. A process for removing volatile contents, such as for example ammonia, hydrogen sulphide, and prussic acid, from waste liquids of coking plants with gas in a stripper, characterized in that the waste gas of an ammoniacracking plant is fed into a stripper, the operating temperature of which amounts to over 70 °C, and preferably between 70 and 90 °C.

2. A process according to Claim 1, characterized in that the waste gas of a Claus plant is mixed with the waste gas from the ammoniacracking plant.

3. A process according to Claim 1, characterized in that the waste gas from the ammoniacracking plant passes through a Claus plant, before it is fed into the stripper.

4. A process according to one or more of Claims 1 to 3, characterized in that the ratio of gas to waste amounts to between 50 and 500 m$^3$ (in the normal state, dry) to 1 m$^3$, and preferably between 80 and 250 m$^3$ (in the normal state, dry) to 1 m$^3$.

5. A process according to one or more of Claims 1 to 4, characterized in that steam is mixed with the waste gas.

**Revendications**

1. Procédé pour l'élimination de substances volatiles telles que par exemple, l'ammoniac, l'acide sulfhydrique l'acide cyanhydrique, d'eaux provenant d'installations de cokerie, à l'aide d'un gaz dans un laveur ou stripper, caractérisé en ce que l'on conduit le gaz résiduaire d'une installation de scission d'ammoniac dans un stripper ou laveur dont la température de service est supérieure à 70 °C, de préférence comprise entre 70 et 90 °C.

2. Procédé suivant la revendication 1, caractérisé en ce que l'on ajoute le gaz résiduaire d'une installation de Claus au gaz résiduaire de l'installation de scission d'ammoniac.

3. Procédé suivant la revendication 1, caractérisé en ce que le gaz résiduaire de l'installation de scission d'ammoniac parcourt une installation de Claus avant d'être introduit dans le laveur ou stripper.

4. Procédé suivant une ou plusieurs des revendications 1 à 3, caractérisé en ce que le rapport gaz à liquide fluctue de 50 à 500 m$^3$ (dans les conditions normales, à sec) par m$^3$, de préférence de 80 à 250 m$^3$ (dans les conditions normales, à sec) par m$^3$.

5. procédé suivant une ou plusieurs des revendications 1 à 4, caractérisé en ce que l'on mélange de la vapeur d'eau au gaz résiduaire.

FIG. 1

FIG. 2